# EUROPEAN PATENT SPECIFICATION

(11) **EP 3 519 507 B1**
(45) Date of publication and mention of the grant of the patent: **13.03.2024**
(21) Application number: 17777265.4
(22) Date of filing: 29.09.2017
(51) Int. Cl.: C09D 5/00, C08K 3/00, C09D 163/00

(54) **COATING**
BESCHICHTUNG
REVÊTEMENT

(30) Priority: 30.09.2016 EP 16191865
(43) Date of publication of application: 07.08.2019
(73) Proprietor: Jotun A/S, 3202 Sandefjord (NO)
(72) Inventor: TECHLOVSKY, Petr, 403 39 Chlumec (CZ)
(74) Representative: Dehns
(86) International application number: PCT/EP2017/074786
(87) International publication number: WO 2018/060430

(56) References cited:
- EP-A2- 0 994 141
- WO-A1-2007/025389
- WO-A1-2017/106269
- US-A1- 2013 345 339
- US-A1- 2014 316 031
- US-B1- 6 521 706

## Description

This invention relates to a coating system, in particular to a coating system comprising a top coat composition which comprises an epoxy resin and particles of recycled vehicle tyres combined with a zinc-rich epoxy primer to form a corrosion and chip resistant coating system. The invention further relates to substrates and articles coated with the coating system and to the use of the coating system in coating articles.

### Background of Invention

The automotive industry is constantly striving to improve aspects such as fuel economy whilst also being heavily driven by design considerations. As a result, manufacturers now seek to employ, amongst other things, lighter weight components where possible.

The use of high tensile strength suspension springs is one example of where such components can deliver the necessary strength at a reduced mass. These do not come without disadvantages, however, since such springs are harder and are subject to higher internal stresses than normal springs. This renders them susceptible to breakage as a result of corrosion as only a low amount of metal loss can lead to a significant reduction in their integrity. Vehicle suspension systems are often subject to extremely corrosive environments, particularly in climates where salt is applied to road surfaces on a frequent basis. Moreover, high tensile steel springs are very sensitive to scratches and thus require protection from impact damage due to flying gravel and stones.

The coating of steel with primers to prevent corrosion is well known. In particular, epoxy coatings are a familiar primer coating. Epoxy coatings are used mainly as part of an anti-corrosive coating system on steel substrates due to their outstanding corrosion and chemical resistance.

Epoxy coating compositions are typically two-component products consisting of an epoxy component and a curing agent.

To date, the most common approach to providing the necessary corrosion and chip resistance has been to combine a zinc-rich epoxy base coat with a thermoplastic top coat layer, which is typically an ethylene/acrylic acid copolymer but can also be a polyolefin. This is described in, for example, US 5981086. Coating systems are also described (e.g. in US 2007/0172665) which comprise a top coat layer which comprises a mixture of an epoxy resin and a thermoplastic resin, with a view to improving the impact resistance of the coating.

Alternative coating systems have been developed which employ a thermosetting resin as opposed to a thermoplastic one. US 2004/0101670 describes a top coat layer which is a "toughened" epoxy resin wherein the epoxy is chemically bound to an elastomer, such as carboxyl-terminated butadiene/acetonitrile (CTBN) rubber. The elastomeric component is considered to impart flexibility to the resin, even at low temperatures. The combination of an epoxy resin and an elastomer is also mentioned in US 6346292 and US 6677032, wherein a core comprising an acrylic rubber is chemically bound to an epoxy resin shell.

The use of an elastomer-modified epoxy thermosetting resin as a top coat is also suggested in WO 2009/092773 and WO 2011/012627. In both cases, the top coat layer is combined with an epoxy primer layer which is substantially free of zinc.

WO 2017/106269 relates to impact resistant coating compositions and describes a curable coating composition comprising an epoxy binder, a curing agent and solid vulcanized rubber particles.

The present inventors have surprisingly found that a corrosion and chip resistant epoxy coating layer can be prepared using an epoxy resin in combination with particles of recycled vehicle tyres, wherein said particles have an average particle size (D₅₀) of 10 to 70 µm. The use of particles derived from recycled vehicle tyres is both cost efficient and environmentally friendly. Moreover, that coating layer can be combined with an epoxy primer layer to produce a coating system which finds particular application in the coating of metal articles, such as high tensile steel.

A coating composition similar to that which we use in our top coat is described in US 6521706. This document describes a coating composition which comprises an epoxy resin, a thermoplastic polymer and vulcanized rubber particles with an average particle size range of 1-300 microns. We have found, however, that the selection of a particular average particle size range imparts particularly attractive properties to the coating composition. Moreover, the need for a thermoplastic component to improve flexibility is not necessarily required in the coating composition of the present invention.

### Summary of Invention

Thus, viewed from one aspect the invention provides a coating system suitable for application to a metallic substrate comprising:
A) a primer layer composition comprising:
   (a) at least one epoxy resin; and
   (b) zinc particles wherein the zinc particles are present in an amount of 40 to 95 wt% relative to the total weight of the primer layer composition; and
B) a top coat composition which is a coating composition comprising:
   a) at least one epoxy resin; and
   b) 8 to 40 wt% relative to the total weight of the top coat composition of particles of recycled vehicle tyres having an average particle size diameter of 10 to 70 µm.

Viewed from another aspect the invention comprises a metal substrate having coated thereon a coating system as hereinbefore defined. In a preferred embodiment, the invention is based on a two layer system consisting of the primer layer and top coat. There are preferably no additional layers present.

Viewed from another aspect the invention comprises a metal substrate having coated thereon a coating system as hereinbefore defined which has been allowed to cure.

Viewed from another aspect the invention provides a process for coating a metal substrate, such as a steel substrate, comprising applying to said substrate a primer layer composition comprising:
(a) at least one epoxy resin; and
(b) zinc particles wherein the zinc particles are present in an amount of 40 to 95 wt% relative to the total weight of the primer layer composition; and

applying to said primer layer composition a top coat composition comprising:
   a) at least one epoxy resin; and
   b) 8 to 40 wt% relative to the total weight of the top coat composition of particles of recycled vehicle tyres having an average particle size diameter of 10 to 70 µm;
and allowing said compositions to cure.

Viewed from another aspect the invention provides a coated metal substrate obtained by the process as herein defined.

Viewed from another aspect the invention provides the use of coating system as hereinbefore defined for protecting a metal substrate, e.g. from corrosion.

### Detailed description of Invention

This invention relates to an anti-corrosive coating composition for a metal substrate such as a steel substrate. That steel substrate can be present on any object on which the coating of the invention might be useful. In particular, the substrate is a high tensile steel substrate, such as a car spring.

The coating composition comprises at least one epoxy resin and particles of recycled vehicle tyres. The coating composition is combined with a primer layer to provide an anti-corrosive coating system and/or additional improvement of mechanical properties.

### Top Coat Composition

The top coat composition of the invention may also be referred to herein as the "coating composition". The top coat composition comprises at least one epoxy resin and particles of recycled vehicle tyres.

### Epoxy Resin

The top coat composition comprises a binder based on at least one epoxy resin, preferably a solid epoxy resin. By "epoxy resin" we mean any polymer which contains two or more epoxide moieties. The combination of epoxy resins within the top coat composition is called a binder herein. Whilst it is within the ambit of the present invention for more than one epoxy resin to be used, it is preferred if the top coat composition comprises a single epoxy resin as the binder.

Whilst it is within the ambit of the current invention for other polymer components to be present in addition to the at least one epoxy resin, it is preferred if the epoxy resin(s) is the sole polymer component in the top coat composition. In a further preferred embodiment, only a single epoxy resin is present as the sole polymer component in the top coat composition. In particular, it is preferred if the top coat composition does not contain a thermoplastic resin.

In one embodiment, the top coat composition is zinc-free, i.e. does not contain any zinc.

Any suitable epoxy resin known in the art may be used in the coating composition of the invention. The skilled worker will be familiar with such resins. The epoxy resin in the top coat composition may be any curable or crosslinkable epoxy resin or a mixture of curable or crosslinkable epoxy resins. By "curable" or "crosslinkable" it is meant that the epoxy resin(s) contains reactive epoxy groups which enable it to be cured or crosslinked.

The at least one epoxy resin may be selected from aromatic or non-aromatic epoxy resins (e.g. hydrogenated epoxy resins), containing more than one epoxy group per molecule, which is placed internally, terminally, or on a cyclic structure. It is preferred if at least one epoxy group is a terminal epoxy group.

Ideally, however, the epoxy resin is a solid epoxy resin, i.e. one which is in the form of a solid at ambient temperature and pressure. Thus, a solid epoxy resin may be contrasted with a liquid epoxy resin, which is in a liquid state at ambient temperature and pressure.

Suitable resins are well known in the art and well known commercial products. Examples of readily available resins suitable for use in the present invention include TGIC (triglycidyl isocyanurate), Araldite PT 910/ PT912, bisphenol A based resins, novolac resins, novolac modified resins, 4,4'-isopropylidenediphenol-epichlorohydrin resins, bisphenol F based resins and glycidyl methacrylates (GMA).

In one preferred embodiment, the epoxy resin is selected from the group consisting of TGIC, Araldite PT 910/ PT912, bisphenol A based resins, novolac modified resins, and 4,4'-isopropylidenediphenol-epichlorohydrin resins and bisphenol F based resins.

In one embodiment the use of glycidyl methacrylates (GMA) as the epoxy resin is excluded.

A particularly preferred epoxy resin is bisphenol A.

The epoxy resin (e.g. solid epoxy resin) may have an equivalent epoxy weight (EEW) of 300-2000. These resins are often described by their "type". Type 2, 2.5, 3, 4 and novalac modified type resins are all suitable here. Type 2 resins may have an EEW = 550-700, e.g. Epikote resin 1002, Epikote resin 3022-FCA. Type 2.5 resins may have a EEW = 600-750, e.g. Araldite GT 6450. Type 3 resins may have EEW = 700-850, e.g. Epikote resin 3003, Araldite GT 7004. Type 4 type resins may have EEW = 800-1000, e.g. Epikote resin 1055. Novalac modified type resins may include Epikote resin 2017 or Araldite GT 7255.

The use of an epoxy resin of EEW 800 to 1000 (such as type 4) is especially preferred.

Examples of suitable commercially available solid epoxy resins are:
CHS-EPOXY 130, Spolchemie a.s. , bisphenol A type (BPA)
KD-213, Kukdo Chemicals&Co, BPA
DER-663UE, DOW Chemicals company, BPA
KD-214C, Kukdo Chemicals&co, BPA
Epikote 3004, Momentive Specialty Chemicals, BPA
CHS-EPOXY 112, Spolchemie a.s. BPA

The epoxy resin(s) is typically present in an amount of 20 to 80 wt%, preferably 50 to 75 wt% relative to the total amount of the top coat composition as a whole. Where more than one resin binder is present it will be understood that these figures refer to the total amount of all resin binders present in the primer layer composition.

The epoxy resin in coating composition of the invention may be defined as "curable" ("crosslinkable") meaning that it is capable of reacting in a curing process with one or more curing agents. By "curable" or "crosslinkable" it is meant that the epoxy resin(s) contains reactive epoxy groups which enable it to be cured or crosslinked. Thus, the epoxy binder is typically combined with curing agent in the top coat composition.

### Curing agent

In some embodiments of the invention, the coating composition contains at least one curing agent. Whilst it is within the ambit of the present invention for a mixture of two or more curing agents to be employed, it is preferred if only a single curing agent is used. Usually, before application of the top coat composition to a substrate, any curing agent is kept separate from the at least one epoxy binder. These are then mixed shortly before application and the mixture applied to the substrate, typically on top of a primer layer composition. The top coat composition then cures to form the coating layer.

Any suitable curing agent capable of curing the at least one epoxy resin may be used. The skilled worker will be familiar with the types of agents which would meet this critera. Example agents include polyhydroxyl phenolic curing agents, in particular polyhydroxyl phenolic curing agents containing 2-methylimidazole; dicyandiamine curing agents; accelerated dicyandiamine curing agents; imidazole derivatives; imidazoline derivatives; acid anhydrides of trimetallic acid; pyromellitic acid; benzophenonetetracarboxylic acid; tetrahydrophthalic acid; cyclopentanedicarboxylic acid; hexahydrophthalic acid; partly esterified adducts of carboxylic acids; aromatic amines; epoxy resin-phenol adducts, or combinations thereof.

In some embodiments, the curing agent is a polyhydroxyl functional phenolic curing agent, which may have a hydroxyl equivalent weight (HEW) of from about 200 to about 500, and can be formed from bisphenol A termination of low molecular weight diglycidyl ethers of bisphenol A.

Especially preferred curing agents include substituted DICY (dicyandiamide) and o-tolyl biguanide (OTB).

Examples of suitable commercially available curing agents are:
Casamid 710 (Thomas Swan) and Aradur 2844 (DOW Chemical company).

The amount of the at least one curing agent present in the coating composition may vary depending on the amounts of other additives present, such as fillers. Typically, the at least one curing agent will be present in an amount from about 1 to 20 wt%, preferably 1.5 to 15 wt%, more preferably 2 to 10 wt% relative to the total amount of the coating composition as a whole. Where more than one curing agent is present, it will be understood that these figures apply to the total amount of all curing agents present in the coating composition.

### Other components

The top coat composition of the present invention may also include other substances commonly used in coating formulations such as fillers, pigments, degassing additives, carbon fibres, mineral fibres, flow control agents, blowing agents and surface modifying agents. These additives in total will typically form up to about 25 wt%, e.g. up to 20 wt%, ideally up to 15 wt%, based on the total amount of the composition as a whole. Additives might be present in as little as 1 wt% or less of the coating.

Fillers include micronized minerals such as barium sulfate, potash feldspar, baryte powder, silica, calcium carbonate. Pigments of interest include organic pigments and inorganic pigments such as carbon black.

It will be appreciated that the top coat composition of the invention is usually a powder coating and thus it will be understood that no solvent is present. It is usual, therefore, for the coating composition to be dry and free of water and other volatile organic solvents.

The top coat composition may also contain various other components, e.g. to enhance its anticorrosive and mechanical properties.

### Particles of Recycled Vehicle Tyres

The top coat composition comprises particles of recycled vehicle tyres with an average particle size diameter (D₅₀) of 10 to 70 µm. The particles are usually not chemically bound to the epoxy resin in the top coat composition.

The particles typically have glass transition temperature in range -60 °C to - 15 °C, but preferably below -25 °C. This helps to ensure that they deliver the necessary flexibility at temperatures below 0 °C, in particular below -30 °C.

The particles can be prepared by any known method known to the skilled person in the art. It will be appreciated that the primary component of vehicle tyres is a rubber. The rubber may be natural rubber or synthetic rubber, although it is most common for a mixture of natural and synthetic rubbers to be present. Typically, the particles of the present invention comprise vulcanized rubber, such as vulcanized natural rubber-styrene butadiene rubber, however the rubber may be any type routinely used in vehicle tyres. The particles will usually comprise 30 to 90 wt% of rubber, preferably 40 to 75 wt%, such as 50 to 60 wt%, relative to the total weight of the particles as a whole.

The particles can also include additives originally present in the vehicle tyres, as are well known in the rubber industry. The presence of these additives does not detrimentally affect the performance of the top coat composition of the invention. Common additives include carbon black, fillers and oil. Carbon black is typically present in an amount of 10 to 50 wt%, such as 25 to 35 wt%, relative to the total weight of the particles as a whole. Oil can be present in amount of 5 to 10 wt%, relative to the total weight of the particles as a whole.

The particles of recycled vehicle tyres have an average particle size diameter (D₅₀) of 10 to 70 µm. It will be understood that D₅₀ represents the median diameter of the particle size distribution, i.e. the value of the particle diameter at 50% in the cumulative distribution. Preferably, D₅₀ is in the range of 15 to 70 µm, such as 20 to 70 µm, e.g. 35 to 65 µm. Several methods for determining particle sizes and diameters are known in the art and any routine procedure may be used to measure these. Within the context of the present invention, particle sizes are typically determined according to ASTM D5644-01.

The amount of particles of recycled vehicle tyres which are present in the top coat composition falls within the range 8 to 40 wt%, preferably 10 to 30 wt%, more preferably 12 to 25 wt%, relative to the total amount of the top coat composition as a whole.

### Primer layer composition

The coating composition of the invention may be combined with a primer layer composition to provide a coating system.

The primer layer composition typically comprises a binder based on at least one epoxy resin. The combination of epoxy resins within the primer layer composition is called a binder herein. Whilst it is within the ambit of the present invention for more than one epoxy resin to be used, it is preferred if the primer layer comprises a single epoxy resin as the binder.

The epoxy binder is combined with zinc particles in the primer layer composition. Other components, typically used in primer layers, such as a curing agent may also be present. Usually, before application of the primer layer composition to a substrate, any curing agent is kept separate from the epoxy binder. These are then mixed shortly before application and the mixture applied to the substrate. That primer layer composition then cures on the substrate to form the primer layer.

The epoxy resin used in the primer layer composition may be one as defined above in the context of the top coat composition.

The use of an epoxy resin of EEW 730 to 840 (such as type 3) is especially preferred.

The epoxy resin(s) is typically present in an amount of 5 to 40 wt%, preferably 10 to 35 wt%, such as 15 to 25 wt% relative to the total amount of the primer layer composition as a whole. Where more than one resin binder is present it will be understood that these figures refer to the total amount of all resin binders present in the primer layer composition.

The primer layer composition will typically also contain a curing agent or hardener to act as a cross-linking agent. This curing agent may be any one as defined above for the top coat composition.

The primer layer composition of the present invention may also include other substances commonly used in coating formulations such as the additives as defined above for the top coat composition. These additives in total will typically form up to about 10 wt%, e.g. up to 5 wt%, ideally up to 15 wt%, based on the total amount of the primer layer composition as a whole. Additives might be present in as little as 0.5 wt% or less of the coating.

It will be appreciated that the primer layer composition of the invention is usually a powder coating and thus it will be understood that no solvent is present. It is usual, therefore, for the coating composition to be dry and free of water and other volatile organic solvents.

### Zinc Particles

The term "zinc particles" in the context of the invention means a particulate material with a high content of zinc, preferably at least 90% by weight of zinc, such as at least 95% by weight of zinc.

The term "particulate material" is intended to cover both fine spherical or irregularly shaped particles and other shapes such as flakes, discs, spheres, needles, platelets, fibres and rods. The particulate material may be a powder or a dust, preferably a dust.

The particle size distribution of the particulate material is of some importance in painting applications. For example, too coarse particulate materials would result in particles sticking through the dry paint film. This leads to defects in the paint film which detrimentally affects the barrier effect and the anti- corrosion properties. The parameters D50 and D99 are equivalent particle diameters for which the volume cumulative distribution, Q3, assumes values of respectively 50 and 99%.

In a preferred embodiment, the zinc particles have a mean particle size (D50) of less than 50 µm. In a further preferred embodiment, the mean particle size of the zinc particles is less than 20 µm, more preferably less than 15 µm, such as less than 12 µm.

Ideally, the presence of zinc particles coarser than 100 µm should be avoided. Therefore it is useful to discard, e.g. by sieving, any particles larger than 100 µm. The zinc particles thus preferably have a D99 of less than 100 µm.

The particulate materials may be manufactured by classic gas atomization of a corresponding coarse zinc material. The material directly obtained from such a process usually still includes coarse particles, which are incompatible with the present invention. In such cases, these coarse particles are typically removed by a further step, such as sieving.

The zinc particles used in the compositions of the present invention may also be obtained from commercial sources. Suppliers include Purity Zinc Metals, Horsehead Corporation, Umicore, US Zinc, Jiashan Baiwei, and Garrison Minerals, among many others, e.g. ZMP 4P16, Umicore (Belgium).

The zinc particles are present in an amount of 40 to 95 wt% relative to the total weight of the primer layer composition, preferably 60 to 90 wt%, more preferably 60 to 75 wt%.

### Preparation of compositions

The top coat composition and primer layer composition are prepared by similar methods. The primer layer composition and top coat compositions are typically manufactured, packed and delivered as separate products.

For each composition, it is preferred if the epoxy resin, curing agent and other components are premixed before extrusion. That secures homogeneity of the premix and quality of final components. The prepared premix is then extruded. Extrusion conditions are known and will generally be kept at low temperature to avoid premature curing, typically below 140 °C. To form a powder composition the extruded granulates can be milled by any type of conventional mill and the particles thereafter classified by a method of choice, to a particle size found most suitable for the particular desired powder application.

The average particle size diameter D₅₀ of the powder coating composition is less than 100 µm. Preferably, D₅₀ is in the range of 10 to 95 µm, more preferably 15 to 75 µm, such as 35 to 55 µm. In general, particle sizes can be established using a Malvern particle size analyser.

If a free flowing control agent is to be added, this is typically done after extrusion as this is a dry blend additive. This agent is typically added in amounts of 0.01 to 1 wt%, preferably 0.3 to 0.2 wt%, relative to the total amount of the powder composition.

### Application to substrates

The primer coating or top coat of the invention can be applied to a substrate by any conventional method known in the art.

Typical powder coating methods include spraying, e.g. electrostatic (corona charged) spraying. The use of triboelectric guns can also be used. A metallic substrate might be also coated by other methods without the use of spraying equipment, for example by immersion into a powder cloud or direct deposition of the powder coating on a pre-heated metallic substrate.

The applied film thickness might vary depending on the nature of substrate being coated. The dry film thickness of the primer layer composition is typically 20 to 500 µm, preferably 50 to 200 µm, e.g. 80 to 120 µm. The dry film thickness of the top coat composition may be 60 to 1500 µm, preferably 250 to 1000 µm, e.g. 300 to 800µm. In embodiments where a top coat is applied without a primer coat, the dry film thickness of the top coat may be 40 to 400 µm, preferably 50 to 180 µm, e.g. 60 to 150µm.

In all embodiments, it is preferred if the coating composition of the invention (i.e. the top coat composition) forms the outermost layer employed on any substrate. The coating composition may be applied on top of a primer layer, or it may be applied directly on a metallic substrate.

### Curing

Once a substrate is coated with the coating composition of the invention, the coating is then usually cured. The coated substrate may be cured in a conventional convection oven or an IR/convection combination oven. It is also possible to use inductive heating. The use of a convection/induction oven or even convection/induction/IR oven is also contemplated.

The use of heat curing is preferred. Where heating is used during curing, the temperature is preferably in the range of 100 to 250 °C, e.g. 150 to 200 °C.

The coating compositions and coating systems of the invention can be cured using short curing cycles, e.g. of 15 minutes or less. These conditions allow the formation of a smooth finish coating layer. Where the primer layer composition and top coat composition are both applied to the substrate prior to curing it is within the ambit of the invention for the primer layer composition to be only semi-cured on curing. It is possible, for example, for the primer layer composition to be semi-cured by residual heat from pre-heated metallic substrate (typically between 60 to 200 °C, ideally 90-130 °C) or semi-cured by the above mentioned curing processes.

It is also possible for the primer layer composition to remain uncured upon curing of the top coat composition.

It is a preferred feature of the invention that the coating composition does not corrode even after severe mechanical treatment. The lack of corrosion also manifests itself in good functionality and long lasting life cycle. The coating is preferably therefore resistant to at least most of the substances used in the car industry and other liquids suitable for use in "under-hood" applications, like coil springs.

### Substrate

The coating system of the invention may be applied to a substrate by the methods as described herein. Typically, the substrate is a metal substrate, such as a steel substrate, e.g. high tensile steel. Example materials include car components, such as car springs.

Thus, the invention comprises a metal substrate having coated thereon a coating system as hereinbefore defined.

The invention also comprises a metal substrate having coated thereon a coating system as hereinbefore defined which has been allowed to cure.

The invention also provides a process for coating a metal substrate, such as a steel substrate, comprising applying to said substrate a primer layer composition comprising:
(a) at least one epoxy resin; and
(b) zinc particles wherein the zinc particles are present in an amount of 40 to 95 wt% relative to the total weight of the primer layer composition; and

applying to said primer layer composition a top coat composition comprising:
   a) at least one epoxy resin; and
   b) 8 to 40 wt% relative to the total weight of the top coat composition of particles of recycled vehicle tyres having an average particle size diameter of 10 to 70 µm;
and allowing said compositions to cure.

The invention furthermore relates to a coated metal substrate obtained by the process as herein defined.

Finally, the invention provides the use of coating system as hereinbefore defined for protecting a metal substrate, e.g. from corrosion.

The invention will now be described with reference to the following non limiting examples.

### Examples

### General procedure for preparation of the compositions

### Preparation of powder:

The ingredients were dry-mixed in a high speed mixer in order to ensure sufficient dispersion of the powder pre-mix. The pre-mix was then added to a Theyson PCE 20/24 twin-screw extruder and extruded under the following conditions: 40 degrees in the feed zone, 50 degrees in the melting zone, 90 degrees in the mixing & dispersion zone, 100 degrees at the head, 500 rpm. 60-65 torque

The extruded material was fed to a chilled roll and passed through a crusher, reducing the chilled material to flakes. The crushed flakes were then fed to a mill. The extruded chips were milled in a mill and sieved through a 125 µm vibrating sieve in order to ensure a particle size distribution (PSD) (d₅₀) of 25-50 µm (determined using a Malvern Mastersizer 2000 particle size analyzer, dry method).

### Application of powder to substrate and curing of films

The powder was applied to panels of zinc phosphated cold roll steel for salt spray testing and sand blasted, zinc phosphate high tensile steel coil spring for the impact testings using a standard corona charging spray-gun. Primer coat was cured at 180°C for 10 min (object temperature) to build dry film thickness 80-120 µm and top coat was cured at 180°C for 10 min (object temperature) to build total dry film thickness 300-800µm.

Substrates coated with powder were cured in conventional heat transfer by convection using a Heraeus conventional benchtop oven.

### Analytical Methods

Salt Spray Test - tested according to ISO 9227. The coatings were exposed to 5% NaCl salt water solution fog at chamber with constant temperature 35+-2°C. Test duration was 1000 h. Criteria for pass: no corrosion, no blisters, no lost adhesion and maximally 2mm corrosion creep from scribe.
Cold Impact Test -tested according to ISO 4532 at 23°C and -40°C and 90N load. Criteria for pass: chip off maximum 3mm in diameter
Stone Impact Test - tested according to SAE J400 at room temperature using 473 ml SAE gravel. Criteria for pass: no surface corrosion after 48 hours of salt spray test.

### Results

An example top coat composition of the invention was prepared (Example 1). Four comparative compositions were also prepared (Comp. Examples 1 to 4). The components in each of these compositions and their amounts in wt% are shown in Table 1.

**Table 1**

| | **Ex.1** | **Comp.Ex.1** | **Comp.Ex.2** | **Comp.Ex.3** | **Comp.Ex.4** |
|---|---|---|---|---|---|
| BPA epoxy (EEW 850-975) | 67.39 | 81.12 | 67.39 | 37.39 | 75.00 |
| Substituted DICY | 2.49 | 3.00 | 2.49 | 2.49 | 2.76 |
| Barium sulphate filler | 6.06 | 7.22 | 6.06 | 6.06 | 6.74 |
| 2-methyl imidazole | 0.13 | 0.16 | 0.13 | 0.13 | 0.15 |
| Organic derivate of a magnesium montmorillonite | 0.67 | 0.81 | 0.67 | 0.67 | 0.75 |
| Mineral fibre (125um) | 5.05 | 6.07 | 5.05 | 5.05 | 5.61 |
| Carbon black pigment | 1.35 | 1.62 | 1.35 | 1.35 | 1.50 |
| Black pigment* 50µm | 16.85 | 0 | | | 7,49 |
| Black pigment* 75µm | | | 16.85 | | |
| Black pigment* 105µm | | | | 16.85 | |
| Dry blended with FFA | 0.06 | 0.06 | 0.06 | 0.06 | 0.06 |

| | | | | | |
|---|---|---|---|---|---|
| * made from recycled vehicle tyres (50-60% vulcanised NR-SBR rubber, 27-33% carbon black and 5-10% process oil). | | | | | |

Each top coat composition was combined with a primer layer composition with the components as shown in Table 2. The resultant binder system properties are shown in Table 3.

**Table 2**

| **Component** | **Amount (wt%)** |
|---|---|
| BPA epoxy (EEW 730-840) | 23.88 |
| Substituted DICY | 1.19 |
| Flow control agent (acrylic absorbed on silica) | 0.24 |
| Benzoin | 0.13 |
| Zinc powder | 73.88 |
| Carbon fibre (60um) | 0.68 |
| Dry blended with FFA | 0.06 |

**Table 3**

| Test | Ex 1. | Comp. Ex.1 | Comp. Ex.2 | Comp. Ex.3 | Comp. Ex.4 |
|---|---|---|---|---|---|
| Salt spray test | pass | pass | pass | pass | pass |
| Cold impact test @ 23°C/-40°C | Pass/fail | Fail/fail | Fail/fail | Fail/fail | Fail/fail |
| Stone impact test | pass | pass | pass | pass | pass |

## Claims

1. A coating system suitable for application to a metallic substrate comprising:
A) a primer layer composition comprising:
(a) at least one epoxy resin; and
(b) zinc particles wherein the zinc particles are present in an amount of 40 to 95 wt% relative to the total weight of the primer layer composition; and
B) a top coat composition which is a coating composition comprising:
a) at least one epoxy resin; and
b) 8 to 40 wt% relative to the total weight of the coating composition of particles of recycled vehicle tyres having an average particle size diameter (D₅₀) measured in accordance with ASTM D5644-01 of 10 to 70 µm.

2. A coating system as claimed in claim 1, wherein the top coat composition is a powder coating composition.

3. A coating system as claimed in claim 1 or 2, wherein the at least one epoxy resin is present in an amount of 20 to 80 wt%, relative to the total weight of the top coat composition as a whole.

4. A coating system as claimed in any of claims 1 to 3, wherein the particles of recycled vehicle tyres are present in an amount of 10 to 30 wt%, relative to the total weight of the top coat composition as a whole.

5. A coating system as claimed in any of claims 1 to 4, wherein the average particle size diameter of the particles is in the range 15 to 70 µm, e.g. 35 to 65 µm.

6. A coating system as claimed in any of claims 1 to 5, wherein the average particle size diameter of the particles of recycled vehicle tyres is in the range 20 to 70 µm.

7. A coating system as claimed in any of claims 1 to 6, wherein the particles of recycled vehicle tyres comprise 30 to 90 wt% rubber, relative to the total weight of the particles as a whole.

8. A coating system as claimed in claim 7, wherein said rubber comprises vulcanised rubber.

9. A coating system as claimed in any of claims 1 to 8, wherein the at least one epoxy resin in the top coat composition is a solid epoxy resin

10. A coating system as claimed in any of claims 1 to 9, wherein the zinc particles have a mean particles size (D50) of less than 50 µm.

11. A coating system as defined in claim 10 wherein the zinc particles have a mean particles size (D50) of less than 20 µm.

12. A metal substrate having coated thereon a coating system as claimed in any of claims 1 to 11 .

13. A metal substrate having coated thereon a coating system as claimed in any of claims 1 to 11 which has been allowed to cure.

14. A process for coating a metal substrate, such as a steel substrate, comprising applying to said substrate a primer layer composition comprising:
(a) at least one epoxy resin; and
(b) zinc particle wherein the zinc particles are present in an amount of 40 to 95 wt% relative to the total weight of the primer layer composition; and
applying to said primer layer composition a top coat composition comprising:
a) at least one epoxy resin; and
b) 8 to 40 wt% relative to the total weight of the top coat composition of particles of recycled vehicle tyres having an average particle size diameter (D50) measured in accordance with ASTM D5644-01 of 10 to 70 µm;
and allowing said compositions to cure.

15. A coated metal substrate obtained by the process defined in claim 14.

16. The use of the coating system as defined in any of claims 1 to 11 for protecting a metal substrate, e.g. from corrosion.

## Patentansprüche

1. Beschichtungssystem, welches für die Anwendung auf einem metallischen Substrat geeignet ist, umfassend:
A) eine Grundierschichtzusammensetzung, umfassend:
(a) zumindest ein Epoxidharz; und
(b) Zinkpartikel, wobei die Zinkpartikel in einer Menge von 40 bis 95 Gew.% relativ zu dem Gesamtgewicht der Grundierschichtzusammensetzung vorhanden sind; und
B) eine Deckschichtzusammensetzung, welche eine Beschichtungszusammensetzung ist, welche umfasst:
(a) zumindest ein Epoxidharz; und
(b) 8 bis 40 Gew.-% relativ zu dem Gesamtgewicht der Beschichtungszusammensetzung an Partikeln recycelter Fahrzeugreifen mit einem in Übereinstimmung mit ASTM D5644-01 gemessenen durchschnittlichen Partikelgrößendurchmesser (D₅₀) von 10 bis 70 µm.

2. Beschichtungssystem nach Anspruch 1, wobei die Deckschichtzusammensetzung eine Pulverbeschichtungszusammensetzung ist.

3. Beschichtungssystem nach Anspruch 1 oder 2, wobei das zumindest eine Epoxidharz in einer Menge von 20 bis 80 Gew.-% relativ zu dem Gesamtgewicht der Deckschichtzusammensetzung als Ganzes vorhanden ist.

4. Beschichtungssystem nach einem der Ansprüche 1 bis 3, wobei die Partikel von recycelten Fahrzeugreifen in einer Menge von 10 bis 30 Gew.-% relativ zu dem Gesamtgewicht der Deckschichtzusammensetzung als Ganzes vorhanden sind.

5. Beschichtungssystem nach einem der Ansprüche 1 bis 4, wobei der durchschnittliche Partikelgrößendurchmesser der Partikel in dem Bereich von 15 bis 70 µm, z. B. 35 bis 65 µm liegt.

6. Beschichtungssystem nach einem der Ansprüche 1 bis 5, wobei der durchschnittliche Partikelgrößendurchmesser der Partikel von recycelten Fahrzeugreifen in dem Bereich von 20 bis 70 µm liegt.

7. Beschichtungssystem nach einem der Ansprüche 1 bis 6, wobei die Partikel von recycelten Fahrzeugreifen relativ zu dem Gesamtgewicht der Partikel als Ganzes 30 bis 90 Gew.-% Gummi umfassen.

8. Beschichtungssystem nach Anspruch 7, wobei der Gummi vulkanisierten Gummi umfasst.

9. Beschichtungssystem nach einem der Ansprüche 1 bis 8, wobei das zumindest eine Epoxidharz in der Deckschichtzusammensetzung ein festes Epoxidharz ist.

10. Beschichtungssystem nach einem der Ansprüche 1 bis 9, wobei die Zinkpartikel eine durchschnittliche Partikelgröße (D50) von weniger als 50 µm aufweisen.

11. Beschichtungssystem wie in Anspruch 10 definiert, wobei die Zinkpartikel eine durchschnittliche Partikelgröße (D50) von weniger als 20 µm aufweisen.

12. Metallsubstrat, welches mit einem Beschichtungssystem nach einem der Ansprüche 1 bis 11 beschichtet ist.

13. Metallsubstrat, welches mit einem Beschichtungssystem nach einem der Ansprüche 1 bis 11 beschichtet ist, welches aushärten konnte.

14. Prozess zum Beschichten eines Metallsubstrats wie beispielsweise eines Stahlsubstrats, umfassend Anwenden einer Grundierschichtzusammensetzung auf das Substrat, umfassend:
(a) zumindest ein Epoxidharz; und
(b) Zinkpartikel, wobei die Zinkpartikel in einer Menge von 40 bis 95 Gew.-% relativ zu dem Gesamtgewicht der Grundierschichtzusammensetzung vorhanden sind; und Anwenden einer Deckschichtzusammensetzung auf die Grundierschichtzusammensetzung, umfassend:
a) zumindest ein Epoxidharz; und
b) 8 bis 40 Gew.-% relativ zu dem Gesamtgewicht der Deckschichtzusammensetzung an Partikeln recycelter Fahrzeugreifen mit einem in Übereinstimmung mit ASTM D5644-01 gemessenen durchschnittlichen Partikelgrößendurchmesser (D50) von 10 bis 70 µm;
und Aushärten-lassen der Zusammensetzungen.

15. Beschichtetes Metallsubstrat, welches durch den in Anspruch 14 definierten Prozess erhalten wurde.

16. Verwendung des wie in einem der Ansprüche 1 bis 11 definierten Beschichtungssystems zum Schutz eines Metallsubstrats, z. B. vor Korrosion.

## Revendications

1. Système de revêtement approprié pour une application sur un substrat métallique comprenant :
A) une composition de couche primaire comprenant :
(a) au moins une résine époxy ; et
(b) des particules de zinc dans lesquelles les particules de zinc sont présentes dans une proportion de 40 à 95 % en poids par rapport au poids total de la composition de couche primaire ; et
B) une composition de couche de finition qui est une composition de revêtement comprenant :
(a) au moins une résine époxy ; et
(b) 8 à 40 % en poids par rapport au poids total de la composition de revêtement de particules de pneus de véhicules recyclés présentant un diamètre moyen des particules (D₅₀) mesuré conformément à la norme ASTM D5644-01 de 10 à 70 µm.

2. Système de revêtement selon la revendication 1, dans lequel la composition de couche de finition est une composition de revêtement en poudre.

3. Système de revêtement selon la revendication 1 ou 2, dans lequel la au moins une résine époxy est présente dans une proportion de 20 à 80 % en poids, par rapport au poids total de la composition de couche de finition dans son ensemble.

4. Système de revêtement selon l'une quelconque des revendications 1 à 3, dans lequel les particules de pneus de véhicules recyclés sont présentes dans une proportion de 10 à 30 % en poids, par rapport au poids total de la composition de couche de finition dans son ensemble.

5. Système de revêtement selon l'une quelconque des revendications 1 à 4, dans lequel le diamètre moyen des particules est compris dans la plage allant de 15 à 70 µm, par exemple entre 35 et 65 µm.

6. Système de revêtement selon l'une quelconque des revendications 1 à 5 dans lequel le diamètre moyen de la taille des particules de pneus de véhicules recyclés est compris dans la plage allant de 20 à 70 µm.

7. Système de revêtement selon l'une quelconque des revendications 1 à 6, dans lequel les particules de pneus de véhicules recyclés comprennent de 30 à 90 % en poids de caoutchouc, par rapport au poids total des particules dans l'ensemble.

8. Système de revêtement selon la revendication 7, dans lequel ledit caoutchouc comprend du caoutchouc vulcanisé.

9. Système de revêtement selon l'une quelconque des revendications 1 à 8, dans lequel la au moins une résine époxy de la composition de couche de finition est une résine époxy solide

10. Système de revêtement selon l'une quelconque des revendications 1 à 9, dans lequel les particules de zinc présentent une taille moyenne (D50) inférieure à 50 µm.

11. Système de revêtement selon la revendication 10, dans lequel les particules de zinc présentent une taille moyenne (D50) inférieure à 20 µm.

12. Substrat métallique sur lequel est appliqué un système de revêtement selon l'une quelconque des revendications 1 à 11.

13. Substrat métallique sur lequel est appliqué un système de revêtement selon l'une quelconque des revendications 1 à 11 et qui a durci.

14. Processus de revêtement d'un substrat métallique, tel qu'un substrat d'acier, comprenant l'application sur ledit substrat d'une composition de couche primaire comprenant :
(a) au moins une résine époxy ; et
(b) des particules de zinc dans lesquelles les particules de zinc sont présentes dans une proportion de 40 à 95 % en poids par rapport au poids total de la composition de couche primaire; et l'application à cette composition de couche primaire d'une composition de couche de finition comprenant :
a) au moins une résine époxy ; et
b) 8 à 40 % en poids par rapport au poids total de la composition de couche de finition de particules de pneus de véhicules recyclés présentant un diamètre moyen des particules (D50) mesuré conformément à la norme ASTM D5644-01 de 10 à 70 µm ;
et permettant à ladite composition de durcir.

15. Substrat métallique revêtu obtenu par le procédé défini dans la revendication 14.

16. Utilisation du système de revêtement tel que défini selon l'une quelconque des revendications 1 à 11 pour protéger un substrat métallique, par exemple de la corrosion.
